# EUROPÄISCHE PATENTSCHRIFT

(11) **EP 2 307 876 B1**
(45) Veröffentlichungstag und Bekanntmachung des Hinweises auf die Patenterteilung: **01.11.2017**
(21) Anmeldenummer: 09780056.9
(22) Anmeldetag: 01.07.2009
(51) Int. Cl.: G01N 21/39, G01N 21/27, G01N 3/00, G01N 21/35

(54) **VERFAHREN ZUR LASERSPEKTROSKOPISCHEN DETEKTION VON GASEN**
METHOD FOR DETECTION OF GASES BY LASER SPECTROSCOPY
PROCÉDÉ DE DÉTECTION SPECTROSCOPIQUE LASER DE GAZ

(30) Priorität: 09.07.2008 EP 08012398
(43) Veröffentlichungstag der Anmeldung: 13.04.2011
(73) Patentinhaber: Siemens Aktiengesellschaft, 80333 München (DE)
(72) Erfinder: CHEN, Jia, 81541 München (DE); HANGAUER, Andreas, 81541 München (DE); STRZODA, Rainer, 81825 München (DE)
(86) Internationale Anmeldenummer: PCT/EP2009/058255
(87) Internationale Veröffentlichungsnummer: WO 2010/003857

(56) Entgegenhaltungen:
- EP-A2- 0 263 931
- WO-A1-02/50515
- WO-A1-2006/030058
- WO-A1-2006/130014
- FR-A1- 2 841 984
- US-A- 5 500 768
- US-A- 6 091 504

## Beschreibung

Die Erfindung betrifft ein Verfahren zur Detektion von Gasen unter Einsatz von laserspektroskopischen Methoden. Es wird speziell eine Lichtquelle mit monochromatischem Licht verwendet, insbesondere ein Laser oder eine Laserdiode, sowie eine Absorptionsstrecke bzw. Messzelle, ein Fotodetektor und eine Elektronik zur Steuerung des Messablaufes und zur Auswertung. Die spektrale Abstimmbarkeit der Lichtquelle bzw. der Laserdiode ermöglicht die Aufnahme von Absorptionsspektren. Die monochromatische Ausführung z. B. einer Laserdiode ist notwendig, um die einzelnen Vibrations-/ Rotationsübergänge der Gasmoleküle ohne prinzipbedingte Verbreiterung aufgelöst messen zu können. Eine Messung wird in der Regel an einer Absorptionsmessstrecke ausgeführt, die zumindest ein Messgas oder Zielgas enthält.

Kohlenmonoxid (CO) ist beispielsweise ein zu ermittelndes Zielgas. Es tritt bei unvollständiger Verbrennung in Feuerungsanlagen, in Motoren oder bei Bränden auf. Im häuslichen Bereich kann in Folge von unbeabsichtigt fehlgeleiteten Verbrennungsgasen ein erhebliches Risiko mit tödlichem Ausgang auftreten. Mit einer Überwachung gefährdeter Räume auf toxische Kohlendioxid oder Kohlenmonoxidkonzentrationen lässt sich das Vergiftungsrisiko jedoch ausschalten.

Wird beispielsweise ein Rauchmelder mit zusätzlichem Kohlenmonoxiddetektor ausgestattet, so erhöht sich die Zuverlässigkeit einer Branderkennung erheblich. In derartigen Anwendungsfällen, bei denen absolute Detektionssicherheit gefordert ist, kann das Leben von Menschen von der Funktionsfähigkeit entsprechender Sensoren abhängen.

Bisher bekannte Kohlenmonoxid-Ketektionsverfahren verwenden bereits die Absorptionsspektroskopie mittels durchstimmbarer Laserdioden. Die Abkürzung für dieses Verfahren ist TDLS, Tuneable Diode Laser Spectroscopy, mit abstimmbarer Laserdiode oder Laser.

Derartige Verfahren weisen folgende charakteristische Merkmale auf. Es ist eine absolute Messung möglich und ein entsprechender Sensor ist verschmutzungsresistent. Die spektrale Messung über einer Absorptionslinie eines Gases schließt immer den Hintergrund mit ein, wobei das Verhältnis zwischen minimaler Transmission der Absorptionslinie und Hintergrundtransmission proportional zur Gaskonzentration ist. Eine absolute Änderung der Transmission, beispielsweise durch Verschmutzung eines Fensters, beeinflusst die Konzentrationsmessung nicht. Üblicherweise kann die Lichtdämpfung mehrere Größenordnungen ansteigen, bevor das Sensorrauschen signifikant zunimmt.

Es treten keine Gerätekonstanten im Zusammenhang mit verwendeten Apparaten auf. Aufgrund der geringen spektralen Breite der Laseremission lassen sich die gemessenen Spektren ohne weitere Instrumentenfunktion direkt mit theoretischen Spektren vergleichen, die lediglich auf Molekülkonstanten und physikalischen Größen wie Druck, Temperatur und optischer Wellenlänge basieren.

Mit der Technik kann eine langzeitstabile Messung durchgeführt werden. Das auf fundamentaler Physik basierende Messprinzip in Verbindung mit den vorgenannten Eigenschaften des Messverfahrens lässt die Realisierung eines langzeitstabilen Gas-Monitors zu.

Es liegt eine inhärente Selbstüberwachung vor. Eine permanente Absorption mit einem Referenzgas ermöglicht die kontinuierliche Überwachung der Funktionsfähigkeit des Sensors. Fehlfunktionen, wie Entweichen des Referenzgases, Unterbrechung des optischen Weges, ein Defekt an einem Laser oder an einer Laserdiode oder an elektrischen Komponenten, kann sofort festgestellt werden.

Höchstmögliche Selektivität ist selbstverständlich, da die einzelnen Absorptionslinien eines Gases schmalbandig sind, womit jedes Gas in der Regel einen unverwechselbaren spektralen Fingerabdruck aufweist. Die hoch aufgelöste Messung mit präziser Erfassung einzelner Linien ermöglicht daher eine äußerst selektive Konzentrationsbestimmung.

Die Laserspektroskopie mit abstimmbarer Laserdiode ermöglicht allgemein eine verzögerungsfreie Messung, was insbesondere bei Abgasmessungen zu Regelzwecken sehr nützlich ist.

Zum Nachweis von Kohlenmonoxid ist weiterhin eine Reihe konventioneller Detektionsprinzipien bekannt, wie Metalloxidsensoren, elektrochemische Zellen, Farbumschlag mit künstlichem Hämoglobin oder Infrarot-Photometrie. Für eine Raumluftüberwachung spielen beispielsweise die elektrochemischen Zellen eine wesentliche Rolle. Ein Nachteil besteht jedoch darin, dass sie ihre Funktionsfähigkeiten nicht selbst überprüfen können. So muss nach mehrjähriger Betriebsdauer darauf vertraut werden, dass der Sensor noch eine korrekte Messung durchführt bzw. muss die Funktionsfähigkeit regelmäßig mit einem Prüfgas getestet werden. Mit einem Kohlenmonoxid-Monitor, basierend auf TDLS, wird eine Selbstüberwachung ermöglicht.

Eine TDLS gestützte Kohlenmonoxid-Detektion ist beispielsweise im professionellen Umfeld zur Überwachung der Sicherheit am Arbeitsplatz im Einsatz. Hier spielen nicht nur die Anschaffungskosten eine Rolle, sondern auch die laufenden Kosten, beispielsweise für regelmäßige Kontrollen. Darüber hinaus spielt eine Wartungsfreiheit eine wesentliche Rolle. Einsatzbereiche für die Laserspektroskopie mit abstimmbarer Laserdiode können bei der Branderkennung in Gebäuden, bei Flugzeugen und bei Schiffen und bei der Regelung und Überwachung von Feuerungsanlagen, sowie als Frühindikator für Fehlfunktionen bei Verbrennungsmotoren angesiedelt sein.

Bei der Abstimmung von abstimmbaren Laserdioden gibt es prinzipiell zwei Möglichkeiten. Eine Abstimmung über die Temperatur der Laserdiode, verknüpft mit einem bestimmten Teilbereich eines Spektrums, verläuft relativ langsam. Wird die Abstimmung der Laserdiode durch Variation des Betriebsstromes realisiert, so verläuft dies schneller, als bei der vorgenannten Methode. Die Wellenlängenskala bei der Durchstimmung einer Laserdiode kann jedoch in der Regel nicht als linear betrachtet werden. Das heißt, dass die genaue Struktur des überstrichenen Spektrums nicht bekannt ist. Darüber hinaus liegt ein zu detektierendes Gas, wie Kohlenmonoxid, nicht in der Atmosphäre vor, so dass dies nicht selbstverständlich detektiert wird.

In der Offenlegungsschrift WO 2006/130014 A1 wird ein Verfahren zur Detektion Gas und Partikeln mithilfe von einem durchstimmbaren Laser im mittleren Infrarotbereich.

In der Offenlegungsschrift WO 2006/030058 A1 wird ein Verfahren mit Zweipunkt-Kalibrierung offenbart, wobei zwei Absorptionslinien von Sauerstoff als Referenzgas verwendet werden, um gleichzeitig eine Versatz- und eine Verstärkungskorrektur zu erhalten. Danach kann die Sauerstoffkonzentration eines Gases bestimmt werden.

In der Patentschrift US 5 500 768 A wird ein Verfahren zur Detektion mindestens eines Zielgases mittels Laserspektroskopie mit einem Laser oder einer Laserdiode, deren Emissionswellenlänge monochrom ist und mittels einer Variation der Betriebstemperatur oder des Betriebsstroms abstimmbar ist, offenbart. Dabei wird eine Absorptionslinie eines Referenzgases zur Kalibrierung verwendet.

Die Aufgabe der Erfindung besteht somit darin, die Identifizierung der einzelnen Absorptionslinien in einem von einer abstimmbaren Laserdiode oder einem Laser überstrichenen Spektrum jeweils bezogen auf die Betriebstemperatur oder auf den Betriebsstrom zuverlässig festzustellen. Weiterhin ist ein Sensor anzugeben, der während der Lebensdauer nicht für Drifterscheinungen oder Alterungserscheinungen anfällig ist. Die Lösung dieser Aufgabe geschieht durch die jeweilige Merkmalskombination des entsprechenden Hauptanspruchs 1. Vorteilhafte Ausgestalten sind den Unteransprüchen zu entnehmen.

Der Erfindung beseitigt den Nachteil, dass bei der Messung von Absorptionsspektren mit durchstimmbaren Lasern oder Laserdioden das Problem besteht, dass die Emissionswellenlänge des Lasers oder der Laserdiode für eine genaue Auswertung der Spektren nicht eindeutig genug bekannt ist. Das hier beschriebene Verfahren ist mit weit über den Strom abstimmbaren Laserdioden realisierbar, wobei mindestens 0,5 nm bei einer Abstimmung für eine Spektralmessung überstrichen werden sollen. Die Weiterentwicklung von elektronischen Bauteilen, beispielsweise der Laserdioden, bringt regelmäßig weitere Exemplare mit umfassenderen Bereichen von Emissionswellenlängen hervor. Wesentlich für die TDLS Technologie, Laserspektrosko-pie mit einer abstimmbaren Laserdiode, ist, dass unterschiedliche Arten von Laserdioden einsetzbar sind. Die richtige Auswahl für ein bestimmtes Verfahren ist von vielen Parametern abhängig. Wesentlich ist, dass eine monochromatische Lichtquelle vorliegt, eine Absorptionsstrecke vorhanden ist, ein Fotodetektor und eine Elektronik zur Steuerung des Messablaufes und der Auswertung vorhanden sind.

Durch die Erfindung wird der Nachteil eliminiert, dass beispielsweise eine Laserdiode zwar in bestimmten Bereichen, insbesondere über den Betriebsstrom, abstimmbar ist, jedoch eine Korrelation zu einzelnen Spektrallinien zunächst nicht zuverlässig zur Verfügung steht. Um eine Kalibrierung der Wellenlängenskala einer Diode relativ zum Betriebsstrom zu erhalten wird mit einer Abstimmung der Laserdiode in einem breiten Wellenlängenbereich der Wellenlängenskala die Laserdiode über beispielsweise mindestens 0,5 Nanometer abgestimmt. Dieser Abstimmbereich wird spektral derart positioniert, dass zugleich sowohl mindestens zwei oder mehr bekannte Absorptionslinien eines Referenzgases umfasst sind darunter auch möglicherweise bekannte Absorptionslinien des Zielgases. Damit kann die Wellenlängenskala der Diode zuverlässig kalibriert werden, sodass eine genaue Zuordnung zwischen Betriebsstrom und Emissionswellenlänge innerhalb des äußerst schmalen Frequenzabstimmbereiches vorliegt.

Nachdem neueste Entwicklungen so genannte vertikal emittierende Laserdioden VCSEL hervorgebracht haben, die beispielsweise eine Detektion von CO bei einer Wellenlänge von 2,3 µm ermöglichen, wird durch diese Eckdaten die TDSL Technologie in Richtung Zuverlässigkeit und Schnelligkeit erweitert. Somit kann vorteilhafter Weise eine vertikal emittierende Laserdiode eingesetzt werden, die beispielsweise bei 2,3 µm monochromatisches Licht emittiert und darüber hinaus durch Variation des Betriebsstromes ein Spektrum von mindestens bis zu 3.0 oder 4,0 Nanometer überstreichen kann.

Ein bei der Messung beteiligtes Referenzgas kann vorteilhafter Weise direkt in einer Referenzgaszelle im Hauptstrahlengang untergebracht sein. Diese kann sich beispielsweise im gleichen Gehäuse wie der Fotodetektor befinden. Somit sind Messgaszelle und Referenzgaszelle im Strahlengang zwischen Laserdiode und Fotodetektor in Reihe geschaltet. Dies kann beim vorliegenden Verfahren ohne Einbußen an Zuverlässigkeit ausgenutzt werden. Referenzgas und Zielgas sollten jedoch unterschiedlich sein.

Von Vorteil ist, falls ein Zielgas ständig in der Atmosphäre bzw. im Messgas vorhanden ist, das mindestens eine Absorptionslinie eines Referenzgases durch mindestens eine Absorptionslinie des mindestens einen Zielgases ersetzt wird.

Falls ein Absorptionsspektrum einer Abstimmung über die zweite schmale Abstimmbreite mit einem berechneten Absorptionsspektrum verglichen wird, wobei eine nicht-iterative Kurvenanpassung mit linearem Regressionsalgorithmus angewandt wird, so kann besonders schnell die Konzentration des mindestens einen Zielgases in einem Schritt berechnen werden.

Eine Reihenschaltung einer Referenzgaszelle mit dem Fotodetektor und der Absorptionsstrecke ist leicht möglich, wenn das Referenzgas nicht dem Zielgas entspricht.

Im Folgenden werden anhand schematischer Figuren die Erfindung nicht einschränkende Ausführungsbeispiele beschrieben:
- Figur 1: zeigt ein wellenlängendifferenziertes Spektrum mit einzelnen Absorptionslinien, stellvertretend für bestimmte Gase; die Absorptionslinien des Methans können zur Kalibrierung des Spektrums bzw. des Betriebsstromes herangezogen werden,
- Figur 2: zeigt den Wellenlängenbereich eines zu Figur 1 zugehörigen schmalen Wellenlängenbereiches, in welchem sich zumindest eine Absorptionslinie des Zielgases, in diesem Fall Kohlenmonoxid CO, befindet,
- Figur 3: zeigt eine schematische Gestaltung eines Kohlenmonoxidsensors mit der Referenzgaszelle und einer Auswertereinheit und insbesondere mit integrierter Messzelle und der Laserdiode als Sender,
- Figur 4: zeigt einen Sensoraufbau mit einer Laserdiode 1, einer Messzelle 5, sowie einer Referenzgaszelle 6 mit Fotodetektor in Reihe geschaltet.

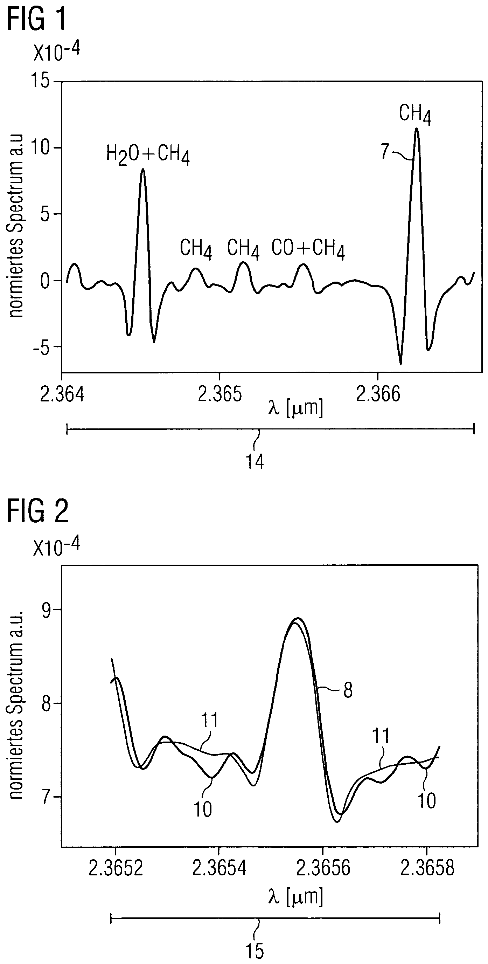

Aufgrund des großen Abstimmbereiches von vertikal emittierenden Lasern, abgekürzt VCSEL, kann eine wesentliche Breite eines Spektrums zur Wellenlängenidentifizierung überstrichen werden, beispielsweise mindestens 0,5 nm (VCSEL bei 760 nm) bis 4,0 nm (VCSEL bei ≥ 2µm). Die Zeitdauer zur Aufnahme eines entsprechenden Spektrums kann beispielsweise 640 ms betragen. Außer dem relativ breiten Abtastbereich, entsprechend Figur 1, wird die Wellenlängenskala anhand der bekannten Lage von starken Absorptionslinien, beispielsweise der Methanlinie, extrahiert. Damit wird eine genaue Zuordnung zwischen dem zur Abstimmung der Laserdiode variierten Betriebsstroms relativ zur jeweiligen Wellenlänge im Spektrum hergestellt.

Figur 2 zeigt eine Absorptionslinie 8 eines Zielgases, hier Kohlenmonoxid (CO). Der in Figur 2 dargestellte Abstimmbereich, bezogen auf die Wellenlänge, ist in dem in Figur 1 dargestellten Wellenlängenbereich enthalten, bzw. bildet eine Untermenge. Damit ist durch die Kalibrierung in Anlehnung an Figur 1, sofern diese für jede Messung eines Zielgases durchgeführt wird, eine äußerst präzise Detektion von beispielsweise Kohlenmonoxid möglich. Es können insbesondere Laser oder Laserdioden, die derart abstimmbar sind, dass mindestens eine Absorptionslinie von Kohlenmonoxid und mindestens drei von Methan als Referenzgas umfasst sind und welche in oder über einen Bereich von beispielsweise 4.0 nm in der Wellenlänge abstimmbar sind, eingesetzt werden. Somit kann für jede zielgasorientierte Messung, entsprechend Figur 2, problemlos eine vorausgehende Kalibrierung mittels einer Messung, entsprechend Figur 1, mit größerem überstrichenem Frequenzspektrum bzw. zweiten schmalen Abstimmbreite 15 durchführbar ist, so dass eine Kalibrierung der Frequenzskala durchgeführt wird und keine Ungenauigkeiten bei der Auswertung hinsichtlich der Lage von Spektrallinien auftreten.

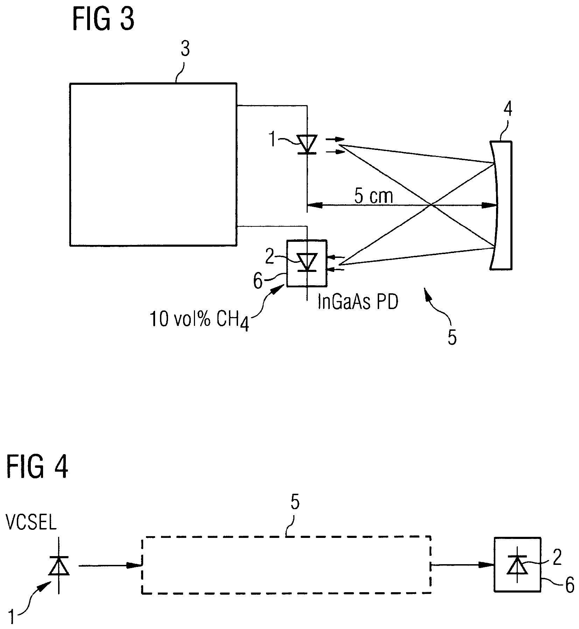

Entsprechend Figur 3 ist ein Gehäuse des Fotodetektors 2 als Referenzgaszelle 6 ausgeführt, wobei beispielsweise 10 Volumen-% Methan (CH₄) in dem Gehäuse des Fotodetektors 2 vorhanden sind. Der Fotodetektor 2 kann beispielsweise aus einer InGaAs-Diode bestehen. Die gesamte Darstellung, entsprechend Figur 3 kann in einem nicht näher dargestellten Gehäuse untergebracht sein, wobei eine Auswertereinheit 3 angeschlossen ist, die zur Steuerung und zur Auswertung entsprechender Verfahren dient. Mit der Messzelle 5, der Absorptionsstrecke, wird z.B. ein sphärischer Spiegel 4 kombiniert, sodass der Strahlengang der von der Laserdiode 1 emittierten Strahlen zumindest nach zweimaliger Durchquerung der Absorptionsstrecke auf den Fotodetektor 2 fällt.

Die eigentliche Detektion und Bestimmung der Gaskonzentration umfasst eine Spektralmessung über einen breiten und einen schmalen Wellenlängenbereich, entsprechend der Figuren 1 und 2. Der breite erste Abstimmbreite 14 dient zur Wellenlängenidentifizierung, d. h. zur Bestimmung des Wellenlängenabstimmverhaltens des Lasers mit dem Strom. Da dieses Verhalten während der Lebensdauer des Lasers nicht als konstant vorausgesetzt werden kann, wird der breite Abstimmbreite 14, entsprechend Figur 1, zur permanenten Kalibrierung in geeigneten Intervallen wiederholt, um die Zuverlässigkeit der Messung von Kohlenmonoxid zu garantieren. Die Identifizierung der Absorptionslinien ist eine Mustererkennung und funktioniert zuverlässig bei allen Gaszusammensetzungen.

Mit der genauen Kenntnis der Wellenlängenskala, während der Aufnahme eines bestimmten Bereiches in einem Spektrum kann eine effiziente lineare Kurvenanpassung durchgeführt werden. Dies basiert auf der Skalierung der Gaskonzentration des Spektrums. In den hier beschriebenen Beispielen wird die Konzentration von Kohlenmonoxid (CO) und von Methan (CH4), sowie ein Offset dargestellt. Das Modellspektrum wird anhand der tabellarischen Linienparameter analytisch nach jeder Abstimmung mit breitem Spektralbereich berechnet. Die lineare Übereinstimmung wird als berechenbares Skalarprodukt implementiert, wobei im vorliegenden Sensor, beispielsweise Messraten von 10 Hz mit jeweils vollständiger Kurvenanpassung auf einem 24 MHz Mikroprozessor verwirklicht werden. Die Messrate kann sich jedoch auch oberhalb des hier angegebenen Wertes befinden. Das vorliegende Verfahren ist um ein bis zwei Größenordnungen schneller, als bisher bekannte iterative so genannte "Kurvenfit"-Verfahren ohne genaue Kenntnis der Wellenlängenskala. Eine sichere Detektion von Kohlenmonoxid geschieht beispielsweise mit einem Kohlenmonoxidsensor mit 100 ms Integrationszeit. Für eine sichere Detektion für die maximale Arbeitsplatzkonzentration (MAK-Wert) kann eine ausreichend kurze Messzeit gewährleistet werden. Kohlenmonoxidmessungen im Abgas eines Gasbrenners werden schnell und zuverlässig erfüllt. Bei Anwendung von längeren Integrationszeiten kann sogar eine Messung im Sub-PPM Bereich durchgeführt werden.

In den Figuren 1 und 2 sind jeweils auf der Abszisse die Wellenlängen in µm angegeben. Auf der Ordinate ist ein normiertes Spektrum eingetragen. Eine Umrechung bzw. Darstellung eines Spektrums in Abhängigkeit von der Frequenz ist jederzeit möglich.

Figur 1 zeigt starke und schwache Absorptionslinien des Methans, welches als Referenzgas benutzt wird. Zur Kalibrierung eines Referenzspektrums mit Bezug auf den Abstimmstrom eines Lasers bzw. einer Laserdiode kann es sinnvoll sein, zwei oder drei in einer Spektralmessung über einen breiten Wellenlängenbereich vorhandene bekannte Referenzgase mit bekannter Absorptionslinie zur Kalibrierung heranzuziehen. Somit ist das überstrichene Spektrum bzw. der korrespondierende Abstimmstrom an zwei oder drei Stellen genau definiert. Eine Abstimmung in einem Teilbereich dieses breiten Spektrums entsprechend Figur 1 kann im Anschluss daran zur Erfassung von Absorptionslinien des Zielgases 8 durchgeführt werden. Die in Figur 2 mit 10 bezeichnete Kurve entspricht einer Kohlenmonoxidkonzentrationsmessung. Die einer linearen Kurvenanpassung unterzogene Kurve trägt das Bezugszeichen 11.

Die Absorptionslinie 8 des Zielgases in diesem Fall Kohlenmonoxid unterscheidet sich hinsichtlich dieser beiden gemessenen und korrigierten Kurven 10, 11 nur unwesentlich. In diesem Fall liegt eine Kohlenmonoxidkonzentration vor, d. h. es ist ein Zielgas in messbarer Menge vorhanden.

**Absorptionsstrecke** 5 und Referenzgaszelle 6 können ohne Einbußen an Zuverlässigkeit in Reihe angeordnet werden, wenn das Referenzgas nicht dem Zielgas entspricht. Eine derartige Anordnung ist in Figur 4 gezeigt. Die Absorptionslinien 7 des Referenzgases, in diesem Fall Methan, dienen als Wellenlängenmarker. Das Identifikationsschema erfordert einen weit abstimmbaren Laser oder eine Laserdiode. Dies ist notwendig, da die Absorptionslinien von Ziel- und Referenzgas einige Nanometer auseinander liegen. Deutlich wird dies in Figur 1. Konventionelle kantenemittierende Halbleiterlaser sind im NIR Bereich lediglich über höchstens 2 nm mittels des Betriebstroms abstimmbar. Die Erfindung arbeitet mit Halbleiterlasern, welche einen Wellenlängenabstimmbereich von mindestens 2,5 nm im Infrarotbereich oder im nahen Infrarotbereich (NIR) aufweisen. Durch das entsprechend dem oben beschriebenen Konzept der Serienschaltung sind keine Strahlteiler notwendig. Es kann eine kostengünstige reflektierende Geometrie mit Hohlspiegel 4 verwendet werden. Dies wird in Figur 3 wiedergegeben. Diese Anordnung ergibt zudem die doppelte optische Weglänge bei gleicher geometrischer Ausdehnung.

Der Fotodetektor 2 ist entsprechend Figur 4 mit einem Referenzgas versehen welches in einer Referenzgaszelle 6 vorhanden ist. Zusammen mit einer nicht dargestellten Optik ist diese messtechnische Ausstattung ausreichend. Insgesamt wird eine separate Küvette für das Referenzgas eingespart. Durch die Möglichkeit eine einfache Optik einzusetzen wird die Anzahl der einzusetzenden Bauelemente verringert. Wenn das Zielgas nicht identisch mit dem Referenzgas ist, werden Unterscheidungsprobleme zwischen Messgas und Referenzgas vermieden.

Durchgeführte Messungen sind mit einem vertikal emittierenden Laser (VCSEL) durchgeführt worden. Für einen Kohlenmonoxidmonitor wird ein Laser, der auf einer Wellenlänge von 2,3 µm emittiert, eingesetzt. Mit einer kompakten optischen Referenzgaszelle 5 kann eine Kalibrierung durchgeführt werden. Damit ist der Sensor mit dem Konzept einer breiten Abstimmbreite für die Wellenlängenidentifizierung bzw. Kalibrierung und der schmalen Abstimmbreite für die Kohlenmonoxidkonzentrationsbestimmung während seiner gesamten Lebensdauer, die typischerweise mehr als 10 Jahre beträgt, genau kalibriert.

Weitere Vorteile bestehen darin, dass Fehlfunktionen des Sensors wie beispielsweise die Blockade des optischen Weges, Ausdiffusion von Referenzgas oder ähnliches sicher erkennbar sind. Weiterhin werden Alterungserscheinungen des Lasers kompensiert.

Die genaue Kenntnis der Wellenlängenscala während der Messung die ohne externe Wellenlängenreferenz oder separate Referenzzelle erreichbar, ermöglicht neben einer Zuverlässigkeitssteigerung einen kompakten Sensoraufbau und eine um Größenordnungen schnellere Datenauswertung. Dadurch werden die Anforderungen an den Sensor zur Bestückung mit Messgeräten wesentlich verbessert. Das vorgestellte Konzept kann universell verwendet werden und ist nahezu universell einsetzbar. Beispielsweise kann es auch für die Detektion von Stickstoffmonoxid (NO) bei einer Wellenlänge einer Bande von ca. 1,8 µm eingesetzt werden, mit Referenzgas H2_{O}, oder bei der Detektion von Wasser (H₂O) bei einer Wellenlänge von 2 µm, mit Referenzgas CO2.

Bei der Konzentrationsmessung können die Anforderungen an die Messgenauigkeit bezüglich des Referenzgases geringer sein.

## Patentansprüche

1. Verfahren zur Detektion mindestens eines Zielgases mittels Laserspektroskopie mit einem Laser oder einer Laserdiode, deren Emissionswellenlänge monochrom ist und mittels einer Variation der Betriebstemperatur oder des Betriebsstroms abstimmbar ist, wobei
- im Wellenlängenbereich einer Bande des mindestens einen Zielgases eine erste Abstimmung des Lasers oder der Laserdiode über eine erste Abstimmbreite (14) umfasst ist, wobei mindestens zwei Absorptionslinien (7) eines Referenzgases und mindestens eine Absorptionslinie (8) des mindestens einen Zielgases enthalten sind, zur Kalibrierung der Wellenlängenskala des Lasers oder der Laserdiode relativ zur variierten Betriebstemperatur oder zum variierten Betriebsstrom,
- im Wellenlängenbereich der Bande des mindestens einen Zielgases eine zweite Abstimmung des Lasers oder der Laserdiode über eine zweite Abstimmbreite (15) umfasst ist, wobei die zweite Abstimmbreite (15) schmaler ist als die erste Abstimmbreite (14), wobei mindestens eine der mindestens einen Absorptionslinie (8) des mindestens einen Zielgases enthalten ist, zur Detektion des mindestens einen Zielgases,
wobei Zielgas und Referenzgas unterschiedliche Gase sind.

2. Verfahren nach Anspruch 1, **dadurch gekennzeichnet, dass** zusätzlich zur Detektion des mindestens einen Zielgases dessen Konzentration gemessen wird.

3. Verfahren nach Anspruch 1 oder 2, **dadurch gekennzeichnet, dass** mindestens eine der mindestens zwei Absorptionslinien (7) eines Referenzgases durch eine der mindestens einen Absorptionslinie (8) des mindestens einen Zielgases ersetzt wird, falls eine Mindestkonzentration des Zielgases ständig vorhanden ist.

4. Verfahren nach einem der vorhergehenden Ansprüche, **dadurch gekennzeichnet, dass** im Strahlengang des Lasers oder der Laserdiode eine Messzelle (5) und eine Referenzgaszelle (6) in Reihe geschaltet werden.

5. Verfahren nach einem der vorhergehenden Ansprüche, **dadurch gekennzeichnet, dass** die erste Abstimmung zur Kalibrierung des Laserstromes oder der Lasertemperatur mit der absoluten Wellenlängenskala durchgeführte wird und die zweite Abstimmung zur Detektion des mindestens einen Zielgases mehrfach hintereinander ausgeführt wird.

6. Verfahren nach einem der vorhergehenden Ansprüche, **dadurch gekennzeichnet, dass** ein Absorptionsspektrum einer Abstimmung über die zweite Abstimmbreite (15) mit einem berechneten Absorptionsspektrum verglichen wird, wobei eine nicht-iterative Kurvenanpassung mit linearem Regressionsalgorithmus angewandt wird, um die Konzentration des mindestens einen Zielgases in einem Schritt berechnen zu können.

## Claims

1. Method for detection of at least one target gas by means of laser spectroscopy by means of a laser or of a laser diode, whose emission wavelength is monochromic and can be tuned by variation of the operating temperature or of the operating current, wherein
- first tuning of the laser or of the laser diode is carried out over a first tuning width (14) in the wavelength range of one band of the at least one target gas, wherein at least two absorption lines (7) of a reference gas and at least one absorption line (8) of the at least one target gas are included, for calibration of the wavelength scale of the laser or of the laser diode relative to the varied operating temperature or to the varied operating current,
- second tuning of the laser or of the laser diode is carried out over a second tuning width (15) in the wavelength range of the band of the at least one target gas, wherein the second tuning width (15) is narrower than the first tuning width (14), wherein at least one of the at least one absorption line or lines (8) of the at least one target gas is included, for detection of the at least one target gas,
wherein target gas and reference gas are different gases.

2. Method according to Claim 1, **characterized in that**, in addition to detection of the at least one target gas, its concentration is measured.

3. Method according to Claim 1 or 2, **characterized in that** at least one of the at least two absorption lines (7) of a reference gas is replaced by one of the at least one absorption line or lines (8) of the at least one target gas, if a minimum concentration of the target gas is continuously present.

4. Method according to one of the preceding claims, **characterized in that** a measurement cell (5) and a reference gas cell (6) are connected in series in the beam path of the laser or of the laser diode.

5. Method according to one of the preceding claims, **characterized in that** the first tuning is carried out for calibration of the laser current or of the laser temperature using the absolute wavelength scale, and the second tuning is carried out for a plurality of times successively in order to detect the at least one target gas.

6. Method according to one of the preceding claims, **characterized in that** an absorption spectrum during tuning over the second tuning width (15) is compared with a calculated absorption spectrum, wherein non-iterative curve matching is used with a linear regression algorithm in order to allow the concentration of the at least one target gas to be calculated in one step.

## Revendications

1. Procédé pour la détection d'au moins un gaz cible au moyen d'une spectroscopie laser avec un laser ou une diode laser dont la longueur d'onde d'émission est monochrome et peut être syntonisée au moyen d'une variation de la température de fonctionnement ou du courant de fonctionnement, dans lequel
- la gamme de longueurs d'onde d'une bande de l'au moins un gaz cible comporte une première syntonisation du laser ou de la diode laser sur une première largeur de syntonisation (14), au moins deux lignes d'absorption (7) d'un gaz de référence et au moins une ligne d'absorption (8) de l'au moins un gaz cible étant contenues pour l'étalonnage de l'échelle de longueurs d'onde du laser ou de la diode laser par rapport à la température de fonctionnement ayant subi une variation ou au courant de fonctionnement ayant subi une variation,
- la gamme de longueurs d'onde de la bande de l'au moins un gaz cible comporte une deuxième syntonisation du laser ou de la diode laser sur une deuxième largeur de syntonisation (15), la deuxième largeur de syntonisation (15) étant plus étroite que la première largeur de syntonisation (14), au moins l'une de l'au moins une ligne d'absorption (8) de l'au moins un gaz cible étant contenue pour la détection de l'au moins un gaz cible,
dans lequel le gaz cible et le gaz de référence sont des gaz différents.

2. Procédé selon la revendication 1, **caractérisé en ce qu'**en plus de la détection de l'au moins un gaz cible, sa concentration est mesurée.

3. Procédé selon la revendication 1 ou la revendication 2, **caractérisé en ce qu'**au moins l'une des au moins deux lignes d'absorption (7) d'un gaz de référence est remplacée par l'une de l'au moins une ligne d'absorption (8) de l'au moins un gaz cible, dans le cas où une concentration minimale du gaz cible est présente en permanence.

4. Procédé selon l'une des revendications précédentes, **caractérisé en ce que** dans le trajet du faisceau du laser ou de la diode laser, une cellule de mesure (5) et une cellule à gaz de référence (6) sont raccordées en série.

5. Procédé selon l'une des revendications précédentes, **caractérisé en ce que** la première syntonisation pour l'étalonnage du courant du laser ou de la température du laser est mise en oeuvre avec l'échelle de longueurs d'onde absolue et la deuxième syntonisation pour la détection de l'au moins un gaz cible est mise en oeuvre à plusieurs reprises successives.

6. Procédé selon l'une des revendications précédentes, **caractérisé en ce qu'**un spectre d'absorption d'une syntonisation sur la deuxième largeur de syntonisation (15) est comparé à un spectre d'absorption calculé, dans lequel un ajustement de courbe non itératif est appliqué avec un algorithme de régression linéaire afin de pouvoir calculer la concentration de l'au moins un gaz cible en une seule étape.
